# EUROPÄISCHE PATENTSCHRIFT

(11) **EP 4 494 250 B1**
(45) Veröffentlichungstag und Bekanntmachung des Hinweises auf die Patenterteilung: **18.06.2025**
(21) Anmeldenummer: 23716231.8
(22) Anmeldetag: 29.03.2023
(51) Int. Cl.: H02K 11/40

(54) **WELLENSTROMABLEITER UND WELLENANORDNUNG**
SHAFT CURRENT COLLECTOR AND SHAFT ASSEMBLY
COLLECTEUR DE COURANT D'ARBRE ET ENSEMBLE ARBRE

(30) Priorität: 30.05.2022 DE 102022205412
(43) Veröffentlichungstag der Anmeldung: 22.01.2025
(73) Patentinhaber: Trelleborg Sealing Solutions Germany GmbH, 70565 Stuttgart (DE)
(72) Erfinder: FRANZ, Martin, 72827 Wannweil (DE); KHOSRAWI, Maike, 70193 Stuttgart (DE); STRANDBERG, Johan, 70193 Stuttgart (DE)
(74) Vertreter: Kohler Schmid Möbus Patentanwälte
(86) Internationale Anmeldenummer: PCT/EP2023/058104
(87) Internationale Veröffentlichungsnummer: WO 2023/232313

(56) Entgegenhaltungen:
- EP-A2- 2 402 612
- EP-B1- 2 914 470
- DE-A1- 10 117 376
- DE-A1- 102013 212 062
- DE-A1- 102017 009 863
- DE-A1- 102021 004 802
- DE-A1- 2 227 076
- DE-T2- 69 933 846

## Beschreibung

Die vorliegende Erfindung betrifft einen Wellenstromableiter und eine Wellenanordnung mit einem solchen.

Bei Wellenanordnungen, wie beispielsweise Generatoren und Elektromotoren, können im Routinebetrieb unerwünschte destruktive elektrische Ströme entstehen, die Lagerbauteile sowie ggf. auch Dichtelemente, die zum Abdichten der gegeneinander bewegbaren Bauteile verbaut sind, beschädigen können. So können Wellenspannungen und -ströme auf einer Motorwelle beispielsweise allein schon durch ungleichmäßige Luftspalt-Magnetflussübergänge im Motor induziert werden. Mit anderen Worten: Der Unterschied zwischen den einzelnen Polen eines Motors (obwohl sie im Idealfall identisch sind) führt zur Bildung eines induzierten Stroms in der Motorwelle. Darüber hinaus kann der Einsatz von drehzahlvariablen Antrieben und den zugehörigen Reglern (z. B. vom Typ Pulsweitenmodulation) auch zu abrupten Stromübergängen und damit verbundenen Magnetflussübergängen führen, die einen unerwünschten induzierten Strom in der Motorwelle verursachen. In der Praxis wird deshalb versucht, derlei induzierte Ströme und Spannungen abzuleiten, ohne den Betrieb des Motors bzw. die Integrität seiner Bauteile zu gefährden. Die etablierten Methoden zum Ableiten von, insbesondere induzierten, Wellenströmen basieren dabei auf einem elektrischen Ableitpfad, bei dem die Wellenströme mit einem möglichst geringen elektrischen Widerstand, d. h. niederohmig, von der Welle abgeleitet werden. Die Ströme dürfen dabei nicht über die vorgenannten Lagerbauteile geführt werden, damit diese keinen Schaden nehmen.

Aus DE 10 2013 212 062 A1 ist eine Vorrichtung zur Ableitung von Erdungsströmen von elektrischen Maschinen bekannt, die einen an einem Läufer der elektrischen Maschine angeordneten Erdungsring und ein mit Masse verbundenes Schleifkontaktelement aufweist. Das Schleifkontaktelement steht mit dem Erdungsring in Kontakt und umfasst eine Kohlenstoffbürste mit Metalleinlagerung.

DE 10 2018 117 315 A1 offenbart beispielsweise ein Wälzlager, bei dem zwischen zwei Lagerringen ein elektrisches Ableitelement in Form eines Schleifkontaktelements angeordnet ist, welches dem Ableiten der vorgenannten parasitären Ströme dient. Das Schleifkontaktelement ist scheibenförmig ausgebildet, drehfest an einem ersten Lagerring befestigt und besteht aus einem elektrisch leitfähigen Material. Das Schleifkontaktelement liegt an einem zweiten Lagerring im elektrisch leitenden Schleifkontakt an. Das Schleifkontaktelement kann als elektrische Leiter beispielsweise sogenannte Nanotubes umfassen.

US 2002/0121821 A1 offenbart demgegenüber eine Wellenanordnung, bei der Wellenströme über ein elektrisch leitfähiges Schmiermittel von der Welle in ein die Welle umgebendes Wellengehäuse abgeleitet werden. Hier besteht das Risiko, dass das Schmiermittel bei sich drehender Welle fliehkraftbedingt aus dem dedizierten Wellenstrom-Ableitbereich entfernt und keine elektrische Kontaktierung der gegeneinander bewegbaren Komponenten mehr möglich ist. Auch kann es bei großen Wellendrehzahlen zu einem Aufheizen des elektrisch leitfähigen Schmiermittels und einem Funktionsverlust desselben als elektrischer Leiter kommen.

JP 2000266067 A offenbart eine Wellenanordnung, bei der die unerwünschten Wellenströme über einen elektrisch leitfähigen Kontakt eines Wellenstromableiters mit den gegeneinander bewegbaren Maschinenteilen erreicht wird. Hier ist der Wellenstromableiter einenends drahtförmig ausgelegt.

US 1,735 579 B wiederum schlägt einen Wellenstromableiter vor, der mehrere keilförmige Metallreiter umfasst, die in Umfangsrichtung um die Welle herum angeordnet sind und welche gemeinsam mittels eines elastischen Vorspannbands gegen eine Nabe der Welle gepresst werden. Die Metallreiter kontaktieren fliehkraftbedingt eine Schräge des Gehäuses in einer elektrisch leitenden Weise.

Zu beachten ist, dass jeder Wellenstromableiter, dessen Funktion auf einer dynamischen elektrischen Kontaktierung einer der elektrisch leitfähigen Komponenten basiert, einem erheblichen mechanischen Verschleiß unterworfen ist. Insoweit droht hier analog zu den Bürstenschleifern der Elektromotoren ein in der Regel allzu frühzeitiger Funktionsausfall. Auch kann die elektrische Kontaktierung durch typischerweise anzutreffende flüssige oder pastöse Schmiermittel behindert bzw. sogar unterbunden werden.

Es ist deshalb die Aufgabe der Erfindung, einen Wellenstromableiter sowie eine Wellenanordnung anzugeben, die die Nachteile des Standes der Technik überwinden und die mit geringem technischen Aufwand kostengünstig bereitgestellt werden können.

Die den Wellenstromableiter betreffende Aufgabe wird durch einen Wellenstromableiter gemäß Anspruch 1 gelöst. Die erfindungsgemäße Wellenanordnung weist die in Anspruch 10 angegebenen Merkmale auf. Bevorzugte Weiterbildungen der Erfindung sind in den Unteransprüchen und in der Beschreibung angegeben.

Der erfindungsgemäße Wellenstromableiter ist zum Einsatz bei einer Wellenanordnung mit einer Welle und einem die Welle umgreifenden Maschinenteil vorgesehen.

Der erfindungsgemäße Wellenstromableiter ermöglicht im Betriebseinsatz das zuverlässige Abführen von Wellenströmen in das die Welle umgreifende Maschinenteil. Nach der Erfindung kann der elektrisch leitfähige Ring dabei insgesamt aus einem elektrisch leitfähigen Material bestehen oder aber ein elektrisch leitfähiges Material umfassen. Das elektrisch leitfähige Material kann insbesondere Metall oder ein elektrisch leitfähiges Polymermaterial, insbesondere ein mit Metall- oder Kohlenstoff dotiertes Polymer, sein.

Nach einer Weiterbildung der Erfindung ist der Ring vollständig geschlitzt ausgeführt. Ein vollständig geschlitzter Ring ist einerseits vereinfacht auf einer Welle zu montieren und weist darüber hinaus einen weiteren entscheidenden Vorteil auf: Wird der Ring in seinem Montagezustand auf der Welle durch das Blockierelement an einem Mitdrehen mit der Welle gehindert, so kann sich der Ring im Falle eines Reibschlusses mit der Welle und unter Abstützung eines freien Endes des Rings am Blockierelement (minimal) aufweiten, sodass der Ring und die Welle bei Erhalt der gegenseitigen elektrisch leitfähigen Kontaktierung vereinfacht in eine Gleitreibung relativ zueinander übergehen können.

Der Ring weist nach einer Ausführungsform der Erfindung einen Grundkörper auf, von dem sich außenumfangsseitig zumindest eine Rippe wegerstreckt, durch die die Eingriffsausnehmung definiert ist. Die Rippe kann beispielsweise auf der Mittelebene des Rings angeordnet sein.

Die vorgenannte Rippe kann dabei zwei Endabschnitte aufweisen, die in Umfangsrichtung des Rings unter Ausbildung der Eingriffsausnehmung voneinander beabstandet angeordnet sind. Dadurch ist die Eingriffsausnehmung in einer radialen Richtung offen ausgeführt, wodurch die Montage des Wellenstromableiters insgesamt vereinfacht wird.

Der Ring kann nach der Erfindung insbesondere als ein Federring ausgebildet sein. Der Federring ist dabei vorzugsweise gummielastisch aufweitbar. Dadurch kann im Montagezustand des Federrings jederzeit eine besonders zuverlässige elektrisch leitende Kontaktierung der Welle durch den Ring gewährleistet werden. Fertigungstoleranzen des Federrings sowie auch der Welle können auf einfache Weise kompensiert werden. Auch kann dadurch die bestimmungsgemäße Montage des Rings auf der Welle nochmals weiter vereinfacht werden.

Nach einer besonders bevorzugten Weiterbildung ist das Blockierelement in der Eingriffsausnehmung des Rings verrastbar. Dadurch kann die Montage des Wellenstromableiters vereinfacht und der Ring sowie das Blockierelement zuverlässig in einer vorgegebenen Relativposition gehalten werden. Das Blockierelement kann beispielsweise einen Pilzkopf aufweisen, der in einer dazu komplementär ausgeführten Eingriffsöffnung des Rings verrastbar ist.

Nach der Erfindung kann das Blockierelement eine trapezförmige Querschnittsform mit Seitenflanken aufweisen, die in einer zur Zentralachse Z radialen Richtung nach außen konvergieren. Weist der Ring zu den Seitenflanken korrespondierende/komplementäre Stirnseiten auf, die relativ zueinander in einer radialen Richtung nach außen konvergieren, so kann dadurch im Betriebseinsatz ein Aufweiten des Rings durch das Blockierelement weiter erleichtert werden.

Der elektrisch leitfähige Ring kann nach einer Ausführungsform der Erfindung auch aus Einzelsegmenten bestehen, die in Umfangsrichtung der Welle hintereinanderliegend angeordnet sind. Diese Einzelsegmente können im Montagezustand des Wellenstromableiters im (Dicht)Spalt zwischen Welle und Maschinenteil angeordnet und in eine Haltenut des Maschinenteils eingreifen oder durch einen Sicherungsring in axialer Richtung relativ zum Blockierelement bzw. zur Welle lagegesichert oder -fixiert sein.

Der elektrisch leitfähige Ring kann nach einer erfindungsgemäßen Ausführungsform mit einem gummielastisch verformbaren Vorspannring in Form einer Feder oder eines Elastomerrings versehen sein, durch den der Ring in einer radialen Richtung gegen die Welle gepresst wird.

Der elektrisch leitende Ring kann nach der Erfindung darüber hinaus auf seiner der Welle zuweisenden Kontaktseite Profilstrukturen bzw. Tribostrukturen zum Ableitung von Schmiermittel aus dem Kontaktspalt aufweisen. Die Tribostrukturen können insbesondere in Form von Rippen oder dreieckig bzw. flügelförmig ausgebildet sein.

Die erfindungsgemäße Wellenanordnung umfasst eine Welle und ein die Welle umgreifendes Maschinenteil, die unter Ausbildung eines Dicht- oder Lagerspalts voneinander beabstandet angeordnet und um eine Drehachse relativ zueinander bewegbar sind. Die Wellenanordnung weist einen vorstehend erläuterten Wellenstromableiter auf. Der elektrisch leitfähige Ring ist auf der Welle montiert und das elektrisch leitfähige Blockierelement ist am Maschinenteil (statisch) festgesetzt, derart, dass durch das Blockierelement bei sich drehender Welle eine Drehhemmung des Rings unter elektrisch leitfähiger Kontaktierung des Rings durch das Blockierelement bewirkt ist. Es versteht sich, dass die Welle aus Metall oder einem anderen, bevorzugt elektrisch leitfähigen, Material besteht.

Der Ring ist vorzugsweise als ein geschlitzter Federring ausgeführt, wobei durch eine Wellendrehung unter einer Abstützung des Rings am Blockierelement eine Aufweitung des am Blockierelement abgestützten Federrings bewirkt ist. Dadurch kann der Ring die Welle besonders reibungsarm und dabei elektrisch leitend kontaktieren.

Nachstehend ist die Erfindung anhand von in der Zeichnung dargestellten Ausführungsbeispielen näher erläutert. Die gezeigten Ausführungsbeispiele sind rein beispielhaft und nicht als Einschränkung der Erfindung zu verstehen.

In der Zeichnung zeigen:
- Fig. 1: eine Wellenanordnung mit einer Welle und einem die Welle umgreifenden Maschinenteil, einem Dichtsatz und einem Lager sowie einem Wellenstromableiter mit einem elektrisch leitfähigen Ring und mit einem zugeordneten Blockierelement, über den kapazitive und/oder induktive Ströme von der Welle in das Maschinenteil ableitbar sind;
- Fig. 2: den elektrisch leitfähigen Ring gemäß Fig. 1 in einer freigestellten Ansicht;
- Fig. 3: eine weitere Ausführungsform des Rings eines Wellenstromableiters gemäß Fig. 1, in einer freigestellten perspektivischen Ansicht;
- Fig. 4: eine weitere Ausführungsform des Wellenstromableiters, bei dem das Blockierelement und der elektrisch leitfähige Ring miteinander verrastbar sind, in einer Detaildarstellung.
- Fig. 5: eine weitere Ausführungsform des Wellenstromableiters, bei dem das Blockierelement zumindest abschnittsweise eine trapezförmige Grundform aufweist und in eine dazu korrespondierende Eingriffsausnehmung des Rings eingreift, in einer Draufsicht;
- Fign. 6: eine weitere Ausführungsform des Wellenstromableiters in einer freigestellten perspektivischen Ansicht (Fig. 6A) und in einer Seitenansicht (Fig. 6B), bei dem das Blockierelement eine trapezförmige Querschnittsform aufweist und bei der die Eingriffsausnehmung durch nach radial außen konvergierende Stirnseiten begrenzt ist, sodass das Blockierelement in reiner radialen Richtung nach außen in der Eingriffsausnehmung gefangen ist;
- Fig. 7: einen elektrisch leitenden Ring für den Wellenstromableiter gemäß Fig. 1, der innenumfangsseitig mit einer Vielzahl von spiralförmigen Tribostrukturen versehen ist, in einer freigestellten perspektivischen Ansicht; und
- Fig. 8: eine weitere Ausführungsform eines elektrisch leitfähigen Rings für den Wellenstromableiter gemäß Fig. 1, der innenumfangsseitig mit flügelprofilartigen Tribostrukturen versehen ist, in einer freigestellten perspektivischen Ansicht.

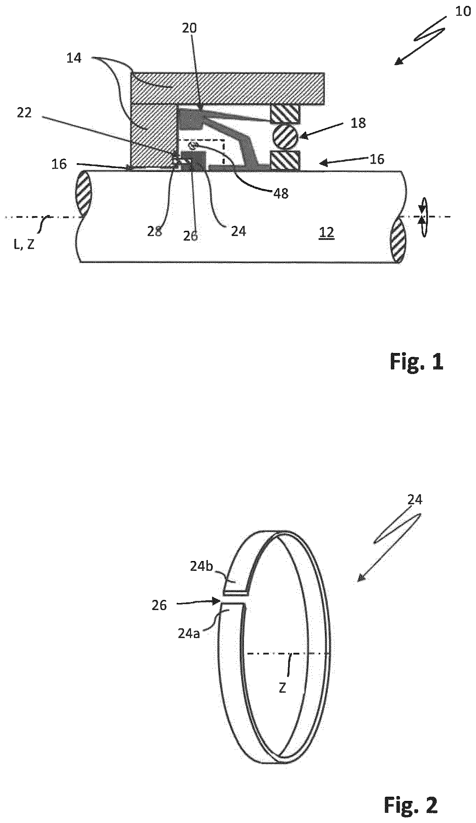

**Fig. 1** zeigt eine Wellenanordnung **10** mit einer Welle **12** und mit einem die Welle 12 umgreifenden Maschinenteil **14,** beispielsweise einem Wellengehäuse, in einer ausschnittsweisen Schnittdarstellung.

Die Welle 12 und das Maschinenteil 14 sind unter Ausbildung eines Dicht- oder Lagerspalts **16** voneinander beabstandet angeordnet und mittels mehrerer Lager **18** um eine mit **L** bezeichnete Drehachse relativ zueinander bewegbar gelagert. In Fig. 1 ist aus Darstellungsgründen nur eines der Lager 18 gezeigt. Zum dynamischen Abdichten des Dicht- oder Lagerspalts 16 dienen ein- oder mehrere Dichtungselemente **20,** die jeweils als ein Radial- oder Axialdichtungselement ausgeführt sein können.

Zum Ableiten von für die Lager 18 und Dichtungselemente 20 potentiell schädlichen induktiv bzw. kapazitiven Strömen von der Welle 12 dient ein insgesamt mit **22** bezeichneter Wellenstromableiter. Der Wellenstromableiter 22 umfasst einen elektrisch leitfähigen Ring **24,** der zur elektrisch kontaktierenden Anordnung der Welle 12 auf der Welle 12 angeordnet ist. Der Ring 24 ist auf der Welle im Gleitspiel-Formschluss angeordnet. Der Ring 24 weist zumindest eine Eingriffsausnehmung **26** auf, die zur Zentralachse **Z** des Rings 24 axial verlaufend angeordnet ist.

Der Wellenstromableiter 22 umfasst weiter ein elektrisch leitfähiges Blockierelement **28.** Das Blockierelement 28 ist am Maschinenteil 14 befestigt. Dies kann durch Festschrauben, Festlöten oder Anschweißen des Blockierelements 28 am Maschinenteil 14 oder in einer anderen geeigneten - elektrisch leitfähigen - Weise erreicht sein.

Das Blockierelement 28 greift im gezeigten Montagezustand des Wellenstromableiters 22 in die Eingriffsausnehmung 26 des Rings 24 ein, derart, dass durch das Blockierelement 28 bei sich drehender Welle 12 eine Drehhemmung des Rings 24 bewirkt ist. Der Ring 24 kontaktiert dabei sowohl die Welle 12 als auch das Blockierelement 28 in elektrisch leitfähiger Weise.

Der Ring 24 kann grundsätzlich insgesamt aus einem elektrisch leitfähigen Material bestehen oder aber zumindest ein elektrisch leitfähiges Material umfassen. Im letztgenannten Fall kann also nur ein Teil bzw. ein Abschnitt des Rings 24 aus einem elektrisch leitfähigen Material bestehen. Als elektrisch leitfähiges Material des Rings 24 kann beispielsweise Metall oder ein elektrisch leitfähiges Polymermaterial, insbesondere ein mit Metall- oder Kohlenstoff dotiertes Polymer, eingesetzt werden.

In **Fig. 2** ist der Ring 24 gemäß Fig. 1 in einer freigestellten perspektivischen Ansicht gezeigt. Der Ring 24 ist insgesamt geschlitzt ausgeführt und weist so in Umfangsrichtung zwei Endabschnitte **24a, 24b** auf, die einander zuweisen. Diese Endabschnitte 24a, 24b begrenzen die Eingriffsausnehmung 26 in Umfangsrichtung des Rings 24. Der Ring 24 ist hier als ein Federring ausgeführt, kann also gummi- oder zähelastisch verformbar sein. Dadurch kann der Ring 24 vereinfacht auf der Welle 12 montiert werden. Ist der Ring 24 als ein Federring ausgeführt, so können dadurch Fertigungstoleranzen des Rings 24 sowie der Welle 12 zuverlässig kompensiert werden.

Bei einem geschlitzten Ring 24 kann im Betriebseinsatz eine besonders geringe Reibung zwischen der Welle 12 und dem Ring 24 bei zugleich erhaltener elektrisch leitfähiger Kontaktierung der Welle 12 durch den Ring 24 erreicht werden.

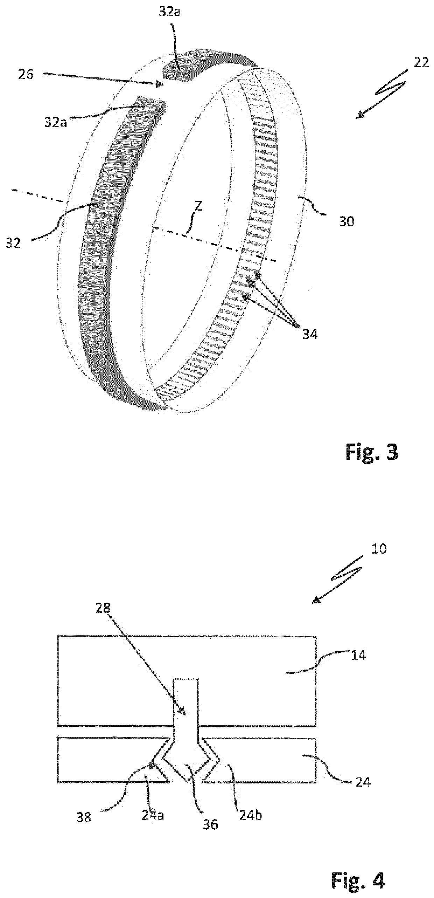

Gemäß dem in **Fig. 3** gezeigten Ausführungsbeispiel kann der Ring 24 einen Grundkörper **30** aufweisen, von dem sich außenumfangsseitig zumindest ein Profilelement **32,** hier in Form einer Rippe bzw. eines Stegs, wegerstreckt. Dieses Profilelement 32 definiert hier die sich axial erstreckende Eingriffsausnehmung 26 für das Blockierelement 28. Die Eingriffsausnehmung ist in radialer Richtung innenseitig zumindest teilweise oder wie in Fig. 3 gezeigt, vollständig, durch den Grundkörper begrenzt. Das Profilelement 32 weist zwei Endabschnitte **32a, 32b** auf, die in Umfangsrichtung des Rings 24 unter Ausbildung der Eingriffsausnehmung 26 voneinander beabstandet angeordnet sind. Nach einer in der Zeichnung nicht näher gezeigten Ausführungsform kann die Eingriffsausnehmung 26 auch als eine (axiale) Durchgangsbohrung oder als eine radiale Einbuchtung (= Vertiefung) des Rings 24 bzw. des Profilelements 32 ausgebildet sein.

Das in Fig. 3 gezeigte Profilelement 32 umfasst hier ein elektrisch leitfähiges Metall oder ist aus diesem gebildet. Besteht der Grundkörper 30 des Rings 24 demgegenüber aus einem Isolator, beispielsweise einem elektrisch nicht leitfähigen Kunststoffpolymer, so weist der Grundkörper 30 vorzugsweise mehrere Radialdurchbrüche **34** auf, die in Umfangsrichtung des Rings 24 voneinander beabstandet angeordnet sind. Das Material des Profilvorsprungs 32 kann sich in einer zur Zentralachse Z radialen Richtung durch die Radialdurchbrüche 34 des Grundkörpers 30 hindurch nach innen in Richtung auf die Zentralachse Z erstrecken, um so eine direkte elektrisch leitfähige Kontaktierung der Welle 12 zu gewährleisten. Der Grundkörper 30 erlaubt dabei eine breitbasige und kippfeste Abstützung des Rings 24 auf der Welle 12. Der Grundkörper kann gemäß Fig. 3 ringförmig geschlossen oder aber selbst geschlitzt ausgeführt sein. Ist der Grundkörper aus einem elastisch verformbaren Polymermaterial gebildet, so kann der Ring insgesamt als ein elastisch aufweitbarer Federring ausgeführt sein.

Das in der Zeichnung dargestellte Blockierelement 28 kann grundsätzlich aus Metall oder aus einem elektrisch leitfähigen Polymer bestehen oder eines dieser Materialien umfassen.

Gemäß dem in **Fig. 4** gezeigten Ausführungsbeispiel kann das Blockierelement 28, vorzugsweise mit seinem freien Endabschnitt **36,** in der Eingriffsausnehmung 26 des Rings 24 verrastbar sein. Dadurch kann der Ring 24 im Montagezustand des Wellenstromableiters 22 auf einfache und zuverlässige Weise in seiner vorgegebenen axialen (sowie rotatorischen) Funktionsstellung auf der Welle 12 relativ zum Blockierelement 28 lagegesichert werden. Die Rastverbindung **38** zwischen Blockierelement 28 und Ring 24 kann dabei sowohl ein axiales als auch ein radiales Spiel zwischen dem Blockierelement 28 und dem Ring 24 aufweisen bzw. zulassen.

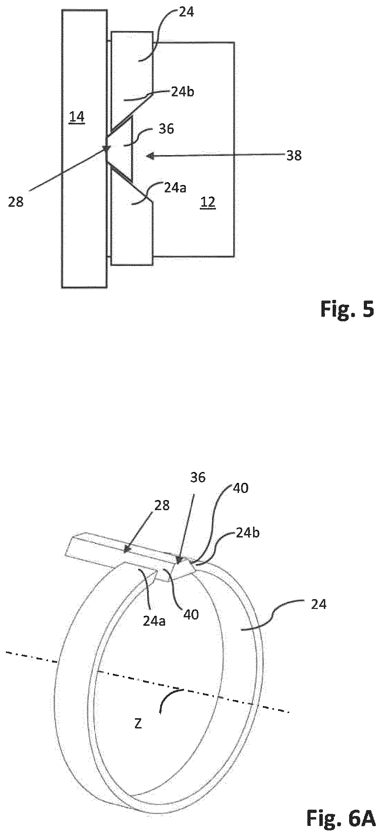

In Fig. 5 ist ein weiterer Wellenstromableiter 22 gezeigt. Das Blockierelement 28 weist hier zumindest abschnittsweise eine trapezförmige Grundform, also einen sich nach distal erweiternden freien Endabschnitt 36 auf. Die Eingriffsausnehmung 26 des elektrisch leitfähigen Rings 24 ist in dazu korrespondierenden Weise ausgeformt, sodass das Blockierelement in der Eingriffsausnehmung 26 verrastbar ist bzw. verrastet gehalten ist.

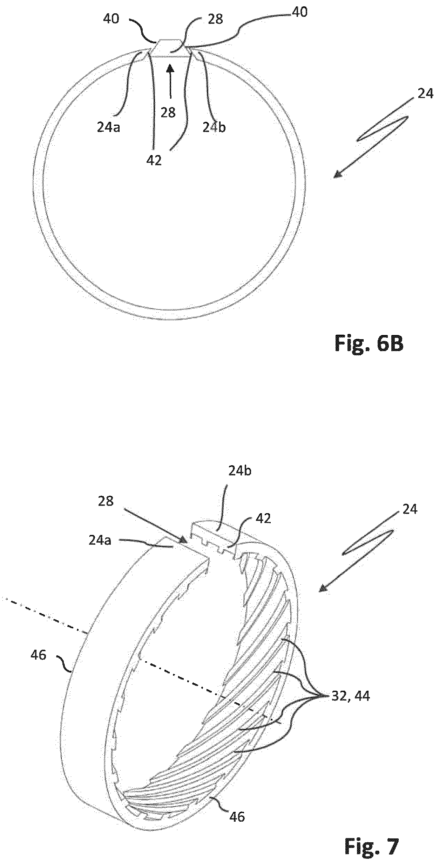

In den Fign. 6A und 6B ist ein weiterer Wellenstromableiter 22 in einer freigestellten perspektivischen Ansicht gezeigt. Das Blockierelement 28 ist hier stift- oder stegförmig mit einer trapezförmigen Querschnittsform ausgeführt. Das Blockierelement 28 verjüngt sich in einer zur Zentralachse Z des elektrisch leitenden Rings 24 radialen Richtung nach außen. Seitenflanken **40** des Blockierelements 28 konvergieren insoweit in einer radialen Richtung nach außen. Die freien Endabschnitte 24a, 24b des Rings 24 weisen dazu korrespondierende bzw. komplementär ausgeformte, Stirnseiten 42 auf, die relativ zueinander in einer radialen Richtung nach außen konvergieren. Im Betriebseinsatz des Wellenstromableiters 22 kann der Ring 24 so unter Anlage einer Seitenflanke 40 des Blockierelements 28 an einer der Stirnseiten 42 des Rings 24 vereinfacht aufgeweitet werden. Dadurch kann der Reibungswiderstand zwischen Ring 24 und Welle 12 (Fig. 1) besonders zuverlässig reduziert werden. Dies unabhängig von der jeweiligen Drehrichtung der Welle 12 um die Drehachse L (Fig. 1).

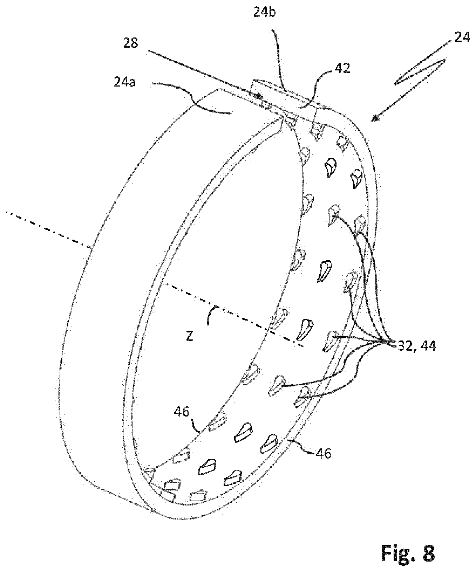

Gemäß den in den **Fign. 7** und **8** gezeigten Ausführungsbeispielen des elektrisch leitfähigen Rings 24 eines erfindungsgemäßen Wellenstromableiters kann dieser innenumfangsseitig Profilvorsprünge 32 in Form von Tribostrukturen **44** aufweisen. Durch derlei Tribostrukturen 44 kann Schmiermittel, das im Dicht- oder Lagerspalt 16 (Fig. 1) zwischen den Ring 24 und die Welle 12 (Fig. 1) gelangt ist, im Betriebseinsatz des Wellenstromableiters 22 zumindest teilweise in einer zur Drehachse L axialen Richtung aus dem Kontaktbereich des Rings 24 und der Welle 12 herausbewegt werden. Bei der Ausführungsform gemäß Fig. 7 erstrecken sich die Tribostrukturen 44 jeweils schraubenförmig in einer axialen Richtung von einem Rand **46** des Rings 24 zum anderen und sind in Umfangsrichtung des Rings 24 voneinander beabstandet hintereinanderliegend angeordnet. Die Tribostrukturen 44 können gemäß Fig. 8 auch als Dreiecks- bzw. Flügelprofile ausgeführt sein. In letztgenanntem Fall können mehrere Tribostrukturen 44 in Richtung der Zentralachse Z hintereinanderliegend oder auch zueinander versetzt, etwa jeweils "auf Lücke" angeordnet sein. Andere geeignete Profile der Tribostrukturen 44 sind für den Fachmann durchaus vorstellbar.

Insgesamt ermöglichen die Tribostrukturen auch bei Schmiermittelexposition ein besonders widerstandsarmes elektrisches Kontaktieren der Welle 12 durch den Ring 24. Mit anderen Worten kann der elektrische Übergangswiderstand zwischen Welle 12 und Ring 24 minimiert werden.

Der Wellenstromableiter 10 kann zusätzlich einen Spannring **48** aufweisen, durch den der Ring 24 in einer radialen Richtung gegen die Welle 12 gepresst wird, der in Fig. 1 mit gestrichelter Linie dargestellt ist.

Die Erfindung betrifft zusammenfassend einen Wellenstromableiter 22 für eine Wellenanordnung 10 mit einer Welle 12 und einem die Welle 12 umgreifenden Maschinenteil 14. Der Wellenstromableiter 22 umfasst einen elektrisch leitfähigen Ring 24 zur elektrisch kontaktierenden Anordnung auf der Welle 12 und mit einer Eingriffsausnehmung 26, die zur Zentralachse Z des Rings 24 axial verlaufend angeordnet ist. Ein Blockierelement 28 ist relativ zur Welle 12 an dem Maschinenteil 14 festlegbar und greift im Montagezustand des Wellenstromableiters 22 in die Eingriffsausnehmung 26 des Rings 24 ein, derart, dass durch das Blockierelement 28 bei sich drehender Welle 12 eine Drehhemmung des Rings 24 unter elektrisch leitfähiger Kontaktierung des Rings 24 durch das Blockierelement 28 bewirkt ist. Die Erfindung betrifft darüber hinaus eine Wellenanordnung 10 mit einem solchen Wellenstromableiter 22.

## Patentansprüche

1. Wellenstromableiter (22) für eine Wellenanordnung (10) mit einer Welle (12) und einem die Welle (12) umgreifenden Maschinenteil (14), umfassend:
- einen elektrisch leitfähigen Ring (24) zur elektrisch kontaktierenden Anordnung auf der Welle (12) und mit einer Eingriffsausnehmung (26), die zur Zentralachse (Z) des Rings (24) axial verlaufend angeordnet ist;
- ein Blockierelement (28), das relativ zur Welle (12) an dem Maschinenteil (14) festlegbar ist und das im Montagezustand des Wellenstromableiters (22) in die Eingriffsausnehmung (26) des Rings (24) eingreift, derart, dass durch das Blockierelement (28) bei sich drehender Welle (12) eine Drehhemmung des Rings (24) unter elektrisch leitfähiger Kontaktierung des Rings (24) durch das Blockierelement (28) bewirkt ist,
wobei der Ring (24) vollständig geschlitzt ausgeführt ist und als ein elastisch aufweitbarer Federring ausgebildet ist oder wobei der Ring aus Einzelsegmenten besteht, die in Umfangsrichtung der Welle hintereinanderliegend angeordnet sind.

2. Wellenstromableiter (22) gemäß Anspruch 1, **dadurch gekennzeichnet, dass** der Ring (24) insgesamt aus einem elektrisch leitfähigen Material besteht oder ein elektrisch leitfähiges Material umfasst.

3. Wellenstromableiter (22) gemäß Anspruch 2, **dadurch gekennzeichnet, dass** der Ring (24) einen Grundkörper (30) aufweist, von dem sich außenumfangsseitig zumindest ein, bevorzugt rippenförmiger, Profilvorsprung (32) wegerstreckt, durch den die Eingriffsausnehmung (26) definiert ist.

4. Wellenstromableiter (22) gemäß Anspruch 3, **dadurch gekennzeichnet, dass** der Profilvorsprung (32) zwei Endabschnitte (32a, 32b) aufweist, die in Umfangsrichtung des Rings (24) unter Ausbildung der Eingriffsausnehmung (26) voneinander beabstandet angeordnet sind.

5. Wellenstromableiter (22) gemäß Anspruch 3 oder 4, **dadurch gekennzeichnet, dass** der Grundkörper (30) mehrere Radialdurchbrüche (34) aufweist, durch die sich der Profilvorsprung (32) radial in Richtung auf die Zentralachse (Z) hindurcherstreckt.

6. Wellenstromableiter (22) gemäß einem der vorhergehenden Ansprüche, **dadurch gekennzeichnet, dass** das Blockierelement (28) derart ausgeformt ist, dass das Blockierelement in der Eingriffsausnehmung (26) des Rings (24) verrastbar ist.

7. Wellenstromableiter (22) gemäß einem der vorhergehenden Ansprüche, **dadurch gekennzeichnet, dass** das Blockierelement (28) eine trapezförmige Querschnittsform mit Seitenflanken (40) aufweist, die in einer zur Zentralachse (Z) radialen Richtung nach außen konvergieren und dass der Ring (24) zu den Seitenflanken (40) korrespondierende Stirnseiten (42) aufweist, die in einer radialen Richtung nach außen konvergieren.

8. Wellenstromableiter (22) gemäß einem der vorhergehenden Ansprüche, **dadurch gekennzeichnet, dass** der elektrisch leitfähige Ring (24) innenumfangsseitig Tribostrukturen (44) aufweist.

9. Wellenstromableiter (22) gemäß einem der vorhergehenden Ansprüche, **dadurch gekennzeichnet, dass** das leitfähige Material des Rings (24) Metall oder ein elektrisch leitfähiges Polymermaterial, insbesondere ein mit Metall- oder Kohlenstoff dotiertes Kunststoffpolymer, ist.

10. Wellenanordnung (10) umfassend eine Welle (12) und ein die Welle (12) umgreifendes Maschinenteil (14), die unter Ausbildung eines Dicht- oder Lagerspalts (16) voneinander beabstandet angeordnet und um eine Drehachse (L) relativ zueinander bewegbar sind, sowie einen Wellenstromableiter (22) nach einem der vorhergehenden Ansprüche,
wobei der elektrisch leitfähige Ring (24) des Wellenstromableiters (22) auf der Welle (12) montiert und das elektrisch leitfähige Blockierelement (28) an dem Maschinenteil (14) befestigt ist, derart, dass durch das Blockierelement (28) bei sich drehender Welle (12) eine Drehhemmung des Rings (24) relativ zum Maschinenteil (14) und unter elektrisch leitfähiger Kontaktierung des Rings (24) durch das Blockierelement (28) bewirkt ist.

11. Wellenanordnung (10) gemäß Anspruch 10, **dadurch gekennzeichnet, dass** durch eine Drehung der Welle (12) um die Drehachse (L) eine Aufweitung des in Umfangsrichtung am Blockierelement (28) abgestützten Federrings (24) bewirkt ist.

12. Wellenanordnung (10) gemäß Anspruch 10 oder 11, **dadurch gekennzeichnet, dass** der Ring (24) mittels eines Vorspannrings (48) in einer radialen Richtung gegen die Welle (12) vorgespannt ist.

## Claims

1. A shaft current collector (22) for a shaft assembly (10) comprising a shaft (12) and a machine part (14) surrounding the shaft (12), the shaft current collector comprising:
- an electrically conductive ring (24) for arrangement on the shaft (12) so as to electrically contact same, which ring has an engagement recess (26) which is arranged so as to extend axially relative to the central axis (Z) of the ring (24);
- a blocking element (28) which can be secured on the machine part (14) relative to the shaft (12) and which, when the shaft current collector (22) is in the installed state, engages into the engagement recess (26) of the ring (24) such that, as the shaft (12) rotates, a rotation of the ring (24) is restricted by the blocking element (28) whilst the ring (24) is electrically conductively contacted by the blocking element (28),
wherein the ring (24) is of fully slotted form and is formed as an elastically expandable spring ring, or wherein the ring consists of individual segments which are arranged one behind the other in the circumferential direction of the shaft.

2. The shaft current collector (22) as claimed in claim 1, **characterized in that** the ring (24) consists entirely of an electrically conductive material or comprises an electrically conductive material.

3. The shaft current collector (22) as claimed in claim 2, **characterized in that** the ring (24) has a main body (30), from the outer circumference of which at least one, preferably rib-like, profile projection (32) extends, which profile projection defines the engagement recess (26).

4. The shaft current collector (22) as claimed in claim 3, **characterized in that** the profile projection (32) has two end portions (32a, 32b) which are spaced from one another in the circumferential direction of the ring (24) so as to form the engagement recess (26).

5. The shaft current collector (22) as claimed in claim 3 or 4, **characterized in that** the main body (30) has a plurality of radial apertures (34) through which the profile projection (32) extends radially in the direction of the central axis (Z).

6. The shaft current collector (22) as claimed in any one of the preceding claims, **characterized in that** the blocking element (28) is formed such that the blocking element can be latched in the engagement recess (26) of the ring (24).

7. The shaft current collector (22) as claimed in any one of the preceding claims, **characterized in that** the blocking element (28) has a trapezoidal cross-sectional shape having side flanks (40) which converge in an outward radial direction with respect to the central axis (Z), and **in that** the ring (24) has end faces (42) which correspond to the side flanks (40) and which converge in an outward radial direction.

8. The shaft current collector (22) as claimed in any one of the preceding claims, **characterized in that** the electrically conductive ring (24) has tribological structures (44) on the inner circumference.

9. The shaft current collector (22) as claimed in any one of the preceding claims, **characterized in that** the conductive material of the ring (24) is metal or is an electrically conductive polymer material, in particular a plastics polymer doped with metal or carbon.

10. A shaft assembly (10) comprising a shaft (12) and a machine part (14) surrounding the shaft (12), which shaft and machine part are spaced from one another so as to form a sealing or bearing gap (16) and are movable relative to one another about an axis of rotation (L), and comprising a shaft current collector (22) according to any one of the preceding claims,
wherein the electrically conductive ring (24) of the shaft current collector (22) is mounted on the shaft (12), and the electrically conductive blocking element (28) is fastened to the machine part (14), such that, as the shaft (12) rotates, a rotation of the ring (24) relative to the machine part (14) is restricted by the blocking element (28) whilst the ring (24) is electrically conductively contacted by the blocking element (28).

11. The shaft assembly (10) as claimed in claim 10, **characterized in that** a rotation of the shaft (12) about the axis of rotation (L) causes an expansion of the spring ring (24), which is supported in the circumferential direction on the blocking element (28).

12. The shaft assembly (10) as claimed in claim 10 or 11, **characterized in that** the ring (24) is preloaded in a radial direction against the shaft (12) by means of a preloading ring (48).

## Revendications

1. Collecteur de courant d'arbre (22) pour un ensemble formant arbre (10) comprenant un arbre (12) et une pièce de machine (14) entourant l'arbre (12), comprenant :
- une bague électriquement conductrice (24) pouvant être agencée en contact électrique sur l'arbre (12) et comprenant un évidement de mise en prise (26) qui est agencé de manière axiale par rapport à l'axe central (Z) de la bague (24) ;
- un élément de blocage (28) qui peut être fixé sur la pièce de machine (14) par rapport à l'arbre (12) et qui vient en prise dans l'évidement de mise en prise (26) de la bague (24) à l'état monté du collecteur de courant d'arbre (22), de telle manière que l'élément de blocage (28) provoque, lorsque l'arbre (12) tourne, un blocage de rotation de la bague (24) avec mise en contact électriquement conducteur de la bague (24) par l'élément de blocage (28),
dans lequel la bague (24) est entièrement fendue et est réalisée sous la forme d'une bague formant ressort élastiquement expansible ou dans lequel la bague est constituée de segments individuels qui sont agencés les uns derrière les autres dans la direction circonférentielle de l'arbre.

2. Collecteur de courant d'arbre (22) selon la revendication 1, **caractérisé en ce que** la bague (24) est constituée dans son ensemble d'un matériau électriquement conducteur ou comprend un matériau électriquement conducteur.

3. Collecteur de courant d'arbre (22) selon la revendication 2, **caractérisé en ce que** la bague (24) présente un corps de base (30) à partir duquel s'étend, du côté circonférentiel extérieur, au moins une saillie profilée (32), de manière préférée en forme de nervure, grâce à laquelle l'évidement de mise en prise (26) est défini.

4. Collecteur de courant d'arbre (22) selon la revendication 3, **caractérisé en ce que** la saillie profilée (32) présente deux sections d'extrémité (32a, 32b) qui sont agencées de manière espacée l'une de l'autre dans la direction circonférentielle de la bague (24) avec formation de l'évidement de mise en prise (26).

5. Collecteur de courant d'arbre (22) selon la revendication 3 ou 4, **caractérisé en ce que** le corps de base (30) présente plusieurs ouvertures radiales (34) à travers lesquelles la saillie profilée (32) s'étend radialement en direction de l'axe central (Z).

6. Collecteur de courant d'arbre (22) selon l'une quelconque des revendications précédentes, **caractérisé en ce que** l'élément de blocage (28) est formé de telle manière que l'élément de blocage peut être encliqueté dans l'évidement de mise en prise (26) de la bague (24).

7. Collecteur de courant d'arbre (22) selon l'une quelconque des revendications précédentes, **caractérisé en ce que** l'élément de blocage (28) présente une section de forme trapézoïdale avec des flancs latéraux (40) qui convergent vers l'extérieur dans une direction radiale par rapport à l'axe central (Z) et **en ce que** la bague (24) présente des faces frontales (42) correspondant aux flancs latéraux (40) et convergeant vers l'extérieur dans une direction radiale.

8. Collecteur de courant d'arbre (22) selon l'une quelconque des revendications précédentes, **caractérisé en ce que** la bague électriquement conductrice (24) présente des structures tribologiques (44) du côté circonférentiel intérieur.

9. Collecteur de courant d'arbre (22) selon l'une quelconque des revendications précédentes, **caractérisé en ce que** le matériau conducteur de la bague (24) est un métal ou un matériau polymère électriquement conducteur, en particulier un polymère plastique dopé par du métal ou du carbone.

10. Ensemble formant arbre (10) comprenant un arbre (12) et une pièce de machine (14) entourant l'arbre (12), qui sont agencés à distance les uns des autres avec formation d'une fente d'étanchéité ou de palier (16) et peuvent être déplacés les uns par rapport aux autres autour d'un axe de rotation (L), et un collecteur de courant d'arbre (22) selon l'une quelconque des revendications précédentes, dans lequel la bague électriquement conductrice (24) du collecteur de courant d'arbre (22) est montée sur l'arbre (12) et l'élément de blocage électriquement conducteur (28) est fixé sur la pièce de machine (14) de telle manière que l'élément de blocage (28) provoque, lorsque l'arbre (12) tourne, un blocage de rotation de la bague (24) par rapport à la pièce de machine (14) avec mise en contact électriquement conducteur de la bague (24) par l'élément de blocage (28).

11. Ensemble formant arbre (10) selon la revendication 10, **caractérisé en ce qu'**une rotation de l'arbre (12) autour de l'axe de rotation (L) provoque un élargissement de la bague formant ressort (24) soutenue au niveau de l'élément de blocage (28) dans la direction circonférentielle.

12. Ensemble formant arbre (10) selon la revendication 10 ou 11, **caractérisé en ce que** la bague (24) est précontrainte contre l'arbre (12) dans une direction radiale au moyen d'une bague de précontrainte (48).
